Europäisches Patentamt

(19) European Patent Office　(11) Numéro de publication: **0 203 875**
**B1**

Office européen des brevets

⑫　　　　　　FASCICULE DE BREVET EUROPEEN

(45) Date de publication du fascicule du brevet:
**19.07.89**

(51) Int. Cl.⁴: **B23Q 1/02, B23Q 39/02**

(21) Numéro de dépôt: **86420125.6**

(22) Date de dépôt: **16.05.86**

(54) **Structure de machine-outil.**

(30) Priorité: **20.05.85 FR 8507917**

(43) Date de publication de la demande:
**03.12.86 Bulletin 86/49**

(45) Mention de la délivrance du brevet:
**19.07.89 Bulletin 89/29**

(84) Etats contractants désignés:
**CH DE FR GB IT LI**

(56) Documents cités:
**DE-A- 1 811 462**
**DE-A- 2 514 615**
**DE-A- 3 025 453**
**FR-A- 995 466**
**GB-A- 1 490 520**
**GB-A- 2 129 718**
**US-A- 1 790 943**
**US-A- 4 484 387**

**Fachkunde für metallverarbeitende Berufe, 31. Aufl.,
Verlag Willing & Co. Wuppertal-Barmen, 1965
Catalogue "Machines outils WIRTH & GRUFFAT
TWG 5"**

(73) Titulaire: **MACHINES OUTILS WIRTH ET GRUFFAT, "Les
Granges" Argonay, F-74370 Pringy(FR)**

(72) Inventeur: **Quinart, Pierre, Monod-Poisy, F-74330 La
Balme de Sillingy(FR)**
Inventeur: **Schoellhammer, Georges, 11, rue Emile
Favre, F-74300 Cluses(FR)**
Inventeur: **Tableau, Pierre, Les Champs Courbet
Metz-Tessy, F-74370 Pringy(FR)**
Inventeur: **Vivien, François, 32, route du Crêt des Vignes,
F-74290 Veyrier-du-Lac(FR)**

(74) Mandataire: **de Beaumont, Michel, Cabinet
Poncet 7, chemin de Tillier B.P. 317, F-74008 Annecy
Cédex(FR)**

ACTORUM AG

## Description

La présente invention concerne les machines-outils comprenant une broche tournante et un ensemble d'outils, ainsi que des moyens pour faire varier la position relative de la broche et des outils.

Les machines-outils actuellement utilisées comprennent plusieurs familles, et notamment: les tours, comportant une broche à rotation rapide destinée à supporter la pièce à usiner et à la présenter en rotation devant des outils fixes ou à déplacement lent; les fraiseuses, comportant une platine ou un support de pièce à usiner, en déplacement lent ou nul, l'outil étant monté sur une broche à rotation rapide.

Les dispositifs connus sont bien adaptés à des productions à grande cadence, dans lesquelles les opérations à effectuer par une même machine-outil sur une pièce sont relativement peu nombreuses et simples.

On a cherché plus récemment à augmenter les possibilités d'usinage d'une pièce par une même machine-outil.

Le document DE-A 3 025 453 décrit une machine d'usinage dans laquelle une broche porte-outils, entraînée par un moteur, est mobile selon deux axes horizontaux, et pénètre dans un conduit d'usinage. Face à l'outil, un plateau support de pièce positionne une pièce dans le conduit d'usinage. Le plateau support de pièce peut coulisser verticalement sur des guides verticaux, et peut osciller en rotation selon un axe transversal pour amener la pièce d'une position horizontale à une position verticale dans le conduit d'usinage. Ce dispositif ne permet pas le tournage et le fraisage.

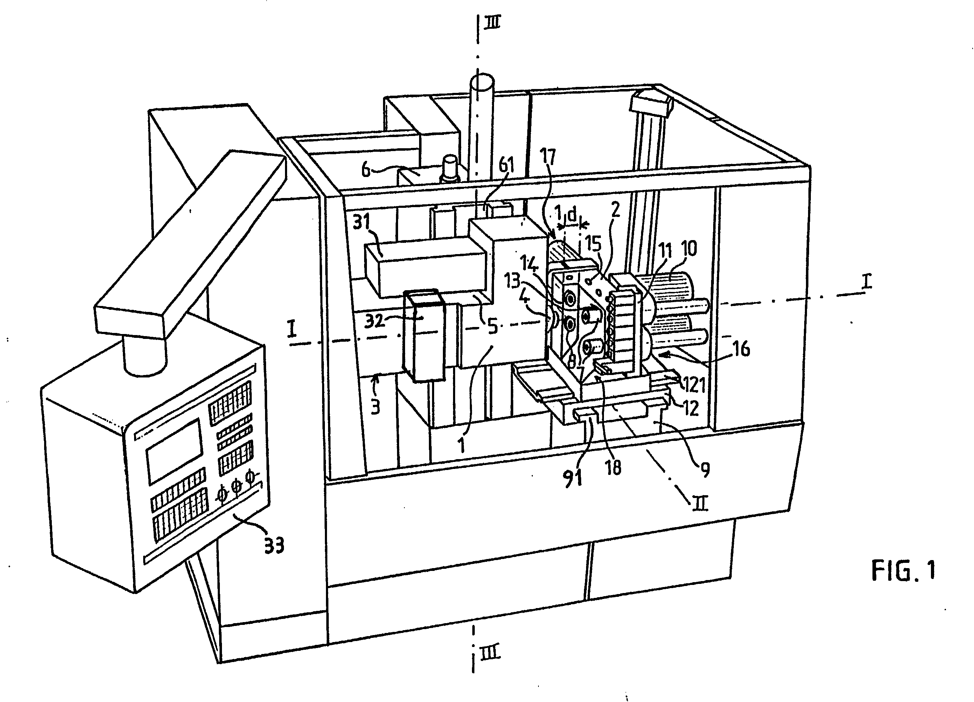

Le document US-A 4 484 387 décrit une machine-outil comprenant un ensemble porte-pièces classique permettant de porter la pièce à usiner et de l'orienter autour d'un axe horizontal. La rotation que peut imprimer un porte-pièces classique à la pièce à usiner est une rotation lente, pour indexage et orientation de la pièce. Un porte-outils comporte des outils tournants d'axe perpendiculaire à l'axe d'orientation de l'ensemble porte-pièces. L'ensemble porte-outils est mobile selon un premier axe horizontal parallèle à l'axe de rotation des outils. Selon un mode de réalisation antérieur, décrit sur la figure 1, l'ensemble porte-outils est en outre mobile selon un axe horizontal perpendiculaire au premier axe de déplacement, et l'ensemble portepièces est mobile selon un axe vertical. Ce document incite à choisir une structure représentée sur la figure 2 selon laquelle l'ensemble porte-outils est mobile selon un seul axe horizontal parallèle à l'axe de rotation des outils, et l'ensemble porte-pièces est mobile selon un axe vertical et selon un axe horizontal parallèle à l'axe d'orientation de la pièce. Le dispositif décrit ne permet pas le tournage. En outre, les possibilités d'usinage sont limitées aux seules faces latérales de la pièce, l'axe de rotation des outils étant perpendiculaire à l'axe d'orientation de la pièce.

Le document GB-A 1 490 520 décrit un tour automatique multibroche, dans lequel la broche est entraînée soit en rotation rapide par un moteur principal, soit en rotation lente par un moteur auxiliaire. Le moteur principal est débrayé de la broche lorsque celle-ci est entraînée en rotation lente par le moteur auxiliaire. Le moteur auxiliaire tourne en permanence, et est donc entraîné par le moteur principal lorsque celui-ci entraîne la broche à vitesse rapide. Le dispositif décrit ne permet pas les opérations auxiliaires d'usinage.

On a plus récemment tenté d'augmenter les possibilités d'usinage d'un tour conventionnel, en réalisant des machines-outils, quelquefois appelées "centres de tournage", telles que les machines-outils WIRTH ET GRUFFAT TWG 5. De telles machines-outils comprennent les organes essentiels d'un tour conventionnel, à savoir une broche porte-pièces rotative de tour sollicitée en rotation selon un axe horizontal par des moyens d'entraînement permettant sa rotation rapide selon la plage de vitesses habituellement utilisées pour les tours. Dans un tel dispositif, les moyens d'entraînement de la broche comprennent au moins un moteur principal permettant la rotation rapide de la broche, et des moyens de commande électroniques permettant de régler la vitesse de rotation du moteur et de la broche, puis de l'arrêter à des positions angulaires successives déterminées. Des outils fixes ou tournants sont montés sur une tourelle revolver porte-outils. La tourelle est déplaçable en translation horizontale selon deux axes perpendiculaires, l'un parallèle à l'axe de la broche, l'autre perpendiculaire à l'axe de la broche. La tourelle pivote autour d'un axe transversal d'orientation. L'entraînement des outils tournants s'effectue par un arbre d'entraînement unique, coaxial avec l'axe transversal de rotation de la tourelle, et entraînant simultanément tous les outils tournants. Dans un tel centre de tournage à tourelle mobile, l'outil actif est en permanence disposé à la même hauteur que l'axe horizontal de broche. Il en résulte que les possibilités d'usinage auxiliaire par les outils fixes ou tournants sont très limitées. La structure générale du porte-outils ne permet pas d'entraîner les outils tournants à des vitesses librement choisies, pouvant être très rapides.

Les dispositifs utilisés jusqu'à ce jour sont relativement peu adaptés à des productions de séries moyennes dans lesquelles la machine-outil doit effectuer un nombre relativement important d'opérations élémentaires.

La présente invention a notamment pour objet de proposer une nouvelle structure de machine-outil, dérivée du tour, et constituant un ensemble particulièrement bien adapté aux séries moyennes à usinage complexe.

Le dispositif est utilisable pour l'usinage de pièces simples aussi bien que pour l'usinage de pièces complexes, et permet des gains de productivité d'autant plus importants que les pièces sont plus complexes.

Une même structure de machine-outil selon l'invention permet d'élargir très substantiellement les possibilités d'usinage d'un tour conventionnel, et en particulier de réaliser, sans démontage de la pièce à usiner, sans aucun changement d'outil, et sans arrêt de la machine, des opérations annexes à celles du tournage: par exemple fraisage, perçage, alésage, taraudage, filetage ou usinage frontaux ou latéraux, dans l'axe des pièces, parallèlement à leur axe ou perpendiculairement à leur axe.

La nouvelle structure permet d'utiliser systématiquement des unités auxiliaires à outils tournants, laissant toutefois la possibilité d'employer des outils fixes. On peut en particulier adapter et changer de position les mêmes unités auxiliaires que celles couramment utilisées sur des machines-transfert, chaque unité auxiliaire pouvant comporter des moyens indépendants d'entraînement en rotation d'un outil, et éventuellement des moyens indépendants de positionnement de l'outil par rapport à un bâti. Les nouvelles structures ainsi conçues permettent d'augmenter les utilisations possibles d'un parc d'unitée auxiliaires qui peuvent ainsi s'adapter sur des machines aussi diverses qu'une machine-transfert ou une machine pour production en petites séries.

Le nombre et la nature des opérations annexes aux opérations de tournage que la structure selon l'invention permet de réaliser dépendent du nombre et du type des unités auxiliaires de travail que l'utilisateur adapte sur la structure. L'invention permet d'adapter simultanément, sur une même structure, un grand nombre d'unités auxiliaires, par exemple de 4 à 12 unités.

Pour atteindre ces objets ainsi que d'autres, la structure selon l'invention utilise les moyens suivants, similaires à ceux d'un centre de tournage WIRTH ET GRUFFAT TWG 5: une broche à pince porte-pièces rotative de tour sollicitée en rotation selon un axe horizontal par des moyens permettant sa rotation rapide selon la plage de vitesses habituellement utilisées pour les tours; un ensemble porte-outils, mobile en translation horizontale par rapport à la broche selon un premier axe parallèle à l'axe de la broche et selon un second axe perpendiculaire; des outils montés fixes sur l'ensemble porte-outils; des outils tournants montés sur l'ensemble porte-outils; les moyens d'entraînement de la broche comprennent au moins un moteur principal permettant la rotation rapide de la broche et des moyens de commande électroniques permettant de régler très rapidement la vitesse de rotation de la broche, puis de l'arrêter à des positions angulaires successives choisies par l'utilisateur.

Selon l'invention, la broche porte-pièces est montée sur un chariot coulissant sur des guides du bâti selon un axe vertical, et les outils, fixes et tournants, sont disposés à des hauteurs diverses de l'ensemble porte-outils et à des positions fixes par rapport à l'ensemble porte-outils. Aucun changement d'outil n'est nécessaire en cours d'usinage d'une pièce, l'usinage pouvant comprendre des opérations de tournage et des opérations annexes, de sorte que la précision de travail obtenue est excellente. Ce résultat est obtenu par le fait que, dans le dispositif de l'invention, la broche n'est pas seulement coulissante pour effectuer des opérations annexes d'usinage selon trois axes de translation, mais aussi pour amener l'axe de la broche dans le plan horizontal contenant la pointe ou l'axe de l'outil actif.

Selon un mode de réalisation de l'invention, l'ensemble porte-outils est conformé pour recevoir et maintenir des unités auxiliaires de travail à entraînement indépendant, chaque unité disposant à demeure de son outil de travail.

Selon un mode de réalisation de l'invention, l'ensemble des outils tournants est rangé selon deux familles distinctes, une première famille d'axe parallèle à l'axe de la broche, et une seconde famille d'axe perpendiculaire à l'axe de la broche; la seconde famille forme une rangée d'outils selon une ligne verticale.

Cette architecture permet notamment une grande accessibilité des dispositifs entraînant les outils en rotation, permettant d'utiliser des unités auxiliaires même encombrantes, assurant une grande facilité d'accès pour leur maintenance ou leur changement.

D'autres objets, caractéristiques et avantages de la présente invention ressortiront de la description suivante d'un mode de réalisation particulier, faite en relation avec la figure annexée représentant une vue schématique en perspective d'une machine-outil selon l'invention.

Comme le représente la figure, la machine selon l'invention comprend un bâti formé d'un montant vertical 6 associé à un banc horizontal 9 auquel il est relié par une pièce de liaison. Un ensemble de moyens de guidage permet les déplacements relatifs entre un ensemble porte-broche 1 et un ensemble porte-outils 2. L'ensemble porte-broche 1 comprend des moyens d'entraînement désignés sur la figure par la référence générale 3, actionnant une broche à pince porte-pièces rotative 4 d'axe longitudinal horizontal I–I.

Dans un mode de réalisation simplifié, la broche 4 est actionnée par un moteur principal 31 permettant sa rotation rapide selon la plage de vitesses habituellement utilisées pour les machines appelées "tour". Le moteur est commandé par une commande numérique 33, et est associé à un dispositif mécanique d'indexage, par exemple un plateau diviseur de type connu monté sur la broche et coopérant avec un ergot de blocage escamotable, pour bloquer la broche en des positions angulaires déterminées par la commande numérique 33.

Dans un mode de réalisation plus élaboré, représenté schématiquement sur la figure, le positionnement et le blocage à l'arrêt de la broche en des positions angulaires déterminées sont assurés par un moteur auxiliaire 32 débrayable, susceptible d'entraîner la broche 4 et le moteur principal 31 selon un mouvement de rotation lent, et d'assurer un blocage sensiblement en toutes positions angulaires. Un tel entraînement peut être obtenu par un moteur à courant continu piloté par la commande numérique 33 selon des informations recueillies sur des capteurs de position angulaire solidaires de la broche ou de l'arbre du moteur, l'ensemble assurant un asservissement de position du moteur. Cette disposition plus élaborée permet de produire un mouvement lent de la broche pendant un usinage par des outils portés par les unités auxiliaires. On peut ainsi effectuer par exemple un usinage en forme d'hélice, ou de spirale, ou d'autres formes complexes.

La commande numérique 33 peut par exemple être un dispositif connu en soi et largement diffusé dans le commerce tel que la commande portant la référence 570 de la société NUM.

L'ensemble porte-broche 1 est monté sur un chariot 5 coulissant lui-même sur des guides 61 du montant vertical 6 selon un axe III-III vertical.

L'ensemble porte-outils 2 est monté sur une coulisse croisée 12 qui coulisse horizontalement sur des guides 91 du banc horizontal 9 selon un mouvement de translation d'axe transversal perpendiculaire à l'axe I-I de la broche porte-pièces. La coulisse croisée 12 porte des guides longitudinaux 121 coopérant avec l'ensemble porte-outils 2 pour permettre sa translation horizontale parallèlement à l'axe I-I de la broche.

L'ensemble porte-outils 2 comprend deux familles d'outils tournants, une première famille 7 dont les outils ont des axes d'outil parallèles à l'axe I-I de la broche 4, et une seconde famille 8 dont les axes d'outil sont perpendiculaires à l'axe de la broche. Les outils de la famille 8 sont rangés les uns au-dessus des autres selon une ligne verticale, de façon à occuper une longueur d la plus réduite possible, la longueur d représentant l'ordre de grandeur de la course longitudinale nécessaire pour l'usinage.

De façon préférée, la famille 8 des outils est rangée selon une ligne parallèle au troisième axe III-III, bien qu'une disposition selon le second axe II-II soit également possible. Dans la disposition représentée sur la figure, l'évacuation des déchets s'effectue naturellement par le bas, par exemple dans un bac-chariot monté sur roulettes, et l'ensemble des broches et des outils est très facilement accessible par le devant de la machine. Les outils tournants peuvent être montés sur des unités auxiliaires 10, facilement accessibles par deux côtés extérieurs de l'ensemble porte-outils 2, et assurant l'entraînement des outils en rotation et en translation.

Dans le mode de réalisation représenté sur les figures, l'ensemble porte outils 2 est un bloc métallique comportant deux parois verticales perpendiculaires l'une avec l'autre, avec, sur une face verticale 18 extérieure, des trous de fixation pour l'adaptation d'une plaque 11 porte-outils de tournage ; la première paroi comporte une première série 13 d'alésages horizontaux traversants parallèles à l'axe I-I de la broche ; la seconde paroi comporte une seconde série 14 d'alésages horizontaux traversants perpendiculaires à l'axe I-I de la broche ; on peut prévoir éventuellement d'autres alésages obliques ; des trous de fixation 15 sont percés en partie supérieure pour l'adaptation d'autres équipements divers. On peut par exemple superposer un second ensemble porte-outils.

Les alésages des deux séries 13 et 14 d'alésages horizontaux, et les alésages obliques, sont des alésages traversants, de positions relatives et dimensions déterminées avec précision pour former surfaces de référence et recevoir avec un très faible jeu des unités auxiliaires de travail comportant une surface complémentaire. De préférence on utilise des unités auxiliaires à surface extérieure cylindrique s'adaptant et se bloquant dans des alésages cylindriques complémentaires de l'ensemble porte-outils. Le bloquage peut être assuré par un tampon tangent venant buter contre la surface extérieure de la portion cylindrique de l'unité auxiliaire, le tampon étant actionné au moyen d'une vis logée dans un alésage taraudé de l'ensemble porte-outils. Les unités auxiliaires sont introduites de l'extérieur, c'est-à-dire depuis les faces 16 et 17 de l'ensemble porte-outils.

On pourra utiliser de préférence des unités auxiliaires à entraînement indépendant, comportant un moteur d'entraînement, une démultiplication avec éventuellement un renvoi d'angle, et une broche porte-outil. Ces unités auxiliaires sont couramment utilisées dans un grand nombre de machines connues, et on peut notamment utiliser l'unité d'usinage portant la référence 55 000 de la société WIRTH & GRUFFAT, l'unité de taraudage portant la référence 59 000 de la société WIRTH & GRUFFAT, ou une unité de perçage à avance hydropneumatique autonome portant la référence 57 000 de la société WIRTH & GRUFFAT.

Le chariot 5 portant la broche 4 est actionné par un moyen d'entraînement à course verticale commandé par la commande numérique 33. De même, la coulisse croisée 12 est actionnée par un moyen d'entraînement à course transversale par rapport au bâti, et l'ensemble porte-outils 2 est entraîné par rapport à la coulisse croisée 12 par un moyen d'entraînement à course longitudinale, les moyens d'entraînement étant commandés par la commande numérique 33. Chaque moyen d'entraînement est avantageusement constitué d'un moteur électrique à courant continu associé à une transmission de type vis-écrou à billes pour produire un mouvement de translation. Les unités auxiliaires portées par l'ensemble porte-outils sont également commandées par la commande numérique 33.

L'architecture selon l'invention permet le changement des pièces à usiner par le haut ou par le devant, l'ensemble porte-broche 1 étant dégagé par coulissement le long des guides verticaux 6, la pièce pouvant être échangée au-dessus de l'ensemble porte-outils 2 ou devant lui sans gêner l'accessibilité. On peut utiliser le mouvement de translation selon l'axe I-I pour se rapprocher d'un magasin de pièces.

Le fontionnement du dispositif est le suivant:

Les opérations de tournage sont réalisées à l'aide des outils montés sur la plaque porte-outils, par positionnement de la broche rotative 4 portant la pièce selon un déplacement vertical pour amener l'axe de la broche dans le plan horizontal contenant la pointe d'outil, puis par déplacement de l'ensemble porte-outils parallèlement et transversalement à l'axe de la broche.

Les opérations annexes au tournage sont exécutées par les unités auxiliaires motorisées 7 et 8. Selon leur type, ces opérations s'effectuent pendant la rotation de la broche et de la pièce à usiner, ou pendant que la broche et la pièce sont arrêtées. Les trois axes de translation sont utilisés.

Le cycle complet d'usinage de la pièce comportant les opérations de tournage et les opérations annexes est exécuté sans arrêt de la machine, sans démontage de la pièce, et sans aucun changement d'outils car les outils de travail gardent leurs mêmes positions relatives pendant toute la durée du cycle.

Suivant l'opportunité, l'entraînement des broches des unités auxiliaires de travail est obtenu à l'aide de moteurs asynchrones conventionnels ou à l'aide de moteurs à régulation de vitesse. Dans le premier cas, la vitesse désirée est obtenue par montage du jeu de poulies et de la courroie adéquates et dans le deuxième cas, la vitesse désirée est affichée sur la commande numérique 33.

Dans le cas où une où plusieurs unités auxiliaires doivent être inclinées d'un certain angle par rapport à la broche, il est plus commode que ces unités comportent un dispositif de commande d'avance intégré aux unités.

La présente invention n'est pas limitée aux modes de réalisation qui ont été explicitement décrits, mais elle en inclut les diverses variantes et généralisations contenues dans le domaine des revendications ci-après.

## Revendications

1. Machine-outil comprenant les organes essentiels d'un tour conventionnel, à savoir:
   – une broche porte-pièces rotative (4) de tour sollicitée en rotation selon un axe horizontal (I–I) par des moyens d'entraînement (3) permettant sa rotation rapide selon la plage de vitesses habituellement utilisées pour les tours;
   – un ensemble porte-outils (2), mobile en translation horizontale par rapport à la broche (4) selon un axe longitudinal parallèle à l'axe (I–I) de la broche et un axe transversal (II–II) perpendiculaire à l'axe de la broche;
   – des outils (11) montés fixes sur l'ensemble porte-outils (2);
   – des moyens (10), montés sur l'ensemble porte-outils, pour entraîner des outils tournants (7, 8) en rotation;
   – les moyens d'entraînement de la broche comprenant au moins un moteur principal (31) permettant la rotation rapide de la broche et des moyens de commande électroniques (33) permettant de régler la vitesse de rotation du moteur et de la broche, puis de l'arrêter à des positions angulaires successives déterminées,
   caractérisée en ce que:
   – la broche (4) porte-pièces est montée sur un chariot (5) coulissant sur des guides (61) du bâti selon un axe (III–III) vertical,
   – les outils, fixes (11) et tournants (7, 8) sont disposés à des hauteurs diverses de l'ensemble porte-outils (2) et à des positions fixes par rapport à l'ensemble porte-outils (2).

2. Machine-outil selon la revendication 1, caractérisée en ce que l'ensemble porte-outils (2) est conformé pour recevoir et maintenir des unités auxiliaires de travail à entraînement indépendant.

3. Machine-outil selon l'une des revendications 1 ou 2, caractérisée en ce que l'ensemble des outils tournants est rangé selon une première famille (7) dont les axes sont parallèles à l'axe de la broche (I–I) et une seconde famille (8) dont les axes sont perpendiculaires à l'axe de la broche.

4. Machine-outil selon la revendication 3, caractérisée en ce que la seconde famille (8) forme une rangée d'outils à axes horizontaux selon une ligne verticale.

5. Machine-outil selon l'une des revendications 3 ou 4, caractérisée en ce que l'ensemble porte-outils (2) comporte deux parois verticales perpendiculaires entre elles, avec:
   – sur une face verticale (18) extérieure, des trous de fixation pour une plaque porte-outils de tournage (11);
   – une série (13) d'alésages horizontaux traversants parallèles à l'axe de la broche pour recevoir des unités auxiliaires de travail;
   – une série (14) d'alésages horizontaux traversants perpendiculaires à l'axe de la broche pour recevoir des unités auxiliaires de travail; et
   – en partie supérieure, des trous (15) de fixation pour le montage d'équipements divers.

6. Machine-outil selon l'une quelconque des revendications 1 à 5, caractérisée en ce qu'elle comprend un bâti formé d'un montant vertical (6) associé à un banc horizontal (9) auquel il est relié par une pièce de liaison, le montant vertical (6) portant les guides (61) sur lesquels coulisse le chariot (5) de la broche porte-pièces (4), le banc horizontal (9) portant des moyens de guidage et de support de l'ensemble porte-outils (2).

7. Machine-outil selon la revendication 6, caractérisée en ce que le banc horizontal (9) porte des guides horizontaux (91) transversaux sur lesquels coulisse une croisée (12) portant des guides longitudinaux (121) sur lesquels coulisse l'ensemble porte-outils (2).

8. Machine-outil selon l'une quelconque des revendications 1 à 7, caractérisée en ce que l'ensemble porte-outils comprend en outre des moyens pour recevoir et disposer des unités auxiliaires de travail selon un axe oblique par rapport à l'axe de la broche.

9. Machine-outil selon l'une quelconque des revendications 1 à 8, caractérisée en ce que les moyens d'entraînement (3) comprennent en outre:
   – un moteur auxiliaire (32) débrayable, commandé par la commande numérique (33), assurant un entraînement à vitesses lentes de la broche (4) et un bloquage en des positions angulaires choisies,
   – des capteurs de position angulaire pour repérer la position de la broche (4) et transmettre l'information à la commande numérique (33).

## Patentansprüche

1. Werkzeugmaschine, welche die wichtigsten Organe einer üblichen Drehmaschine aufweist, nämlich:
   – eine rotierende, als Werkstückhalter dienende Welle (4) einer Drehmaschine, welche in Rotation um eine horizontale Achse (I–I) durch Antriebseinrichtungen (3) belastet wird, was ihre schnelle Rotation gemäß dem Geschwindigkeitsbereich, der üblicherweise für Drehmaschinen angewendet wird, erlaubt;
   – eine Werkzeughaltereinheit (2), welche in Bezug auf die Welle (4) in einer horizontalen Translationsbewegung bewegbar ist und zwar längs einer Längsachse, die parallel zu der Achse (I–I) der Welle ist und längs einer Querachse (II–II), die senkrecht zur Achse der Welle ist;

— Werkzeuge (11), die fest auf der Werkzeughaltereinheit (2) montiert sind;

— Einrichtungen (10), welche auf der Werkzeughaltereinheit montiert sind, um die drehenden Werkzeuge (7, 8) in Rotation anzutreiben; wobei die Antriebseinrichtungen für die Welle mindestens einen Hauptmotor (31) aufweisen, welcher die schnelle Rotation der Welle erlaubt und elektronische Steuereinrichtungen (33) aufweisen, welche erlauben, die Rotationsgeschwindigkeit des Motors und der Welle zu regeln, und sie danach an bestimmten, aufeinanderfolgenden Winkelpositionen anzuhalten, dadurch gekennzeichnet, daß

— die als Werkstückhalter dienende Welle (4) auf einem Schlitten (5) montiert ist, welcher auf Führungen (61) des Gestells längs einer vertikalen Achse (III–III) gleitet,

— die feststehenden Werkzeuge (11) und die drehenden Werkzeuge (7, 8) an unterschiedlichen Höhen der Werkzeughaltereinheit (2) und an Positionen, welche fest sind in Bezug auf die Werkzeughaltereinheit (2), angeordnet sind.

2. Werkzeugmaschine nach Anspruch 1, dadurch gekennzeichnet, daß die Werkzeughaltereinheit (2) ausgebildet ist, um Arbeitshilfseinheiten mit unabhängigem Antrieb aufzunehmen und zu halten.

3. Werkzeugmaschine nach einem der Ansprüche 1 oder 2, dadurch gekennzeichnet, daß die Gesamtheit der drehenden Werkzeuge geordnet ist gemäß einer ersten Familie (7), deren Achsen parallel zu der Achse der Welle (I–I) sind, und einer zweiten Familie (8), deren Achsen senkrecht zu der Achse der Welle sind.

4. Werkzeugmaschine nach Anspruch 3, dadurch gekennzeichnet, daß die zweite Familie (8) eine Reihe von Werkzeugen, welche horizontale Achsen aufweisen, längs einer vertikalen Linie bildet.

5. Werkzeugmaschine nach einem der Ansprüche 3 oder 4, dadurch gekennzeichnet, daß die Werkzeughaltereinheit (2) zwei vertikale, senkrecht zueinander stehende Wände aufweist, mit:

— Befestigungslöchern für eine als Drehwerkzeughalter dienende Platte (11) auf einer vertikalen Außenfläche (18);

— eine Reihe (13) horizontaler Bohrungen, welche parallel zur Achse der Welle verlaufen, um Arbeitshilfseinheiten aufzunehmen;

— eine Reihe (14) horizontaler Bohrungen, welche senkrecht zu Achse der Welle verlaufen, um Arbeitshilfseinheiten aufzunehmen; und

— Befestigungslöchern (15) für das Montieren unterschiedlicher Ausrüstungen im oberen Teil.

6. Werkzeugmaschine nach einem der Ansprüche 1 bis 5, dadurch gekennzeichnet, daß sie ein Gestell aufweist, welches durch eine vertikale Halterung (6) gebildet wird, welche mit einer horizontalen Bank (9) verbunden ist, mit der er durch ein Verbindungsstück verbunden ist, wobei die vertikale Halterung (6) Führungen (61) trägt, auf welchen der Schlitten (5) der Werkstückhalterwelle (4) gleitet, und wobei die horizontale Bank (9) Führungs- und Trägereinrichtungen für die Werkzeughaltereinheit (2) aufweist.

7. Werkzeugmaschine nach Anspruch 6, dadurch gekennzeichnet, daß die horizontale Bank (9) querliegende horizontale Führungen (91) trägt, auf welcher ein Kreuztisch (12) gleitet, welcher Längsführungen (121) trägt, auf welchen die Werkzeughaltereinheit (2) gleitet.

8. Werkzeugmaschine nach einem der Ansprüche 1 bis 7, dadurch gekennzeichnet, daß die Werkzeughaltereinheit außerdem Einrichtungen aufweist, um Arbeitshilfseinheiten aufzunehmen und anzuordnen längs einer Achse, die bezüglich der Wellenachse schräg ist.

9. Werkzeugmaschine nach einem der Ansprüche 1 bis 8, dadurch gekennzeichnet, daß die Antriebseinrichtungen (3) außerdem aufweisen:

— einen ausschaltbaren Hilfsmotor (32), welcher durch die numerische Steuerung (33) gesteuert wird, was einen Antrieb mit langsamer Geschwindigkeit der Welle (4) und eine Blockierung in selektierten Winkelpositionen sicherstellt,

— Winkelpositionssensoren, um die Position der Welle (4) zu ermitteln und die Information an der numerischen Steuerung (33) zu übermitteln.

**Claims**

1. Machine tool comprising the essential elements of a conventional lathe, namely:

— a rotary workpiece-holding lathe spindle (4) driven in rotation about a horizontal axis (I–I) by driving means (3) allowing its rapid rotation within the range of speeds normally used for lathes;

— a tool-carrier assembly (2) movable in translation horizontally with respect to the spindle (4) along a longitudinal axis parallel to the axis (I–I) of the spindle and a transverse axis (II–II) at right angles to the axis of the spindle;

— tools (11) fixedly mounted on the tool-carrier assembly (2);

— means (10) mounted on the tool-carrier assembly, for driving turning tools (7, 8) in rotation;

— the driving means for the spindle comprising at least one principal motor (31) allowing the rapid rotation of the spindle and electronic control means (33) allowing the speed of rotation of the motor and of the spindle to be controlled, then to stop it at specific successive angular positions, characterized in that:

— the workpiece-holding spindle (4) is mounted on a carriage (5) sliding on guideways (61) of the frame along a vertical axis (III–III),

— the tools, stationary (11) and rotary (7, 8), are situated at different heights of the tool-carrier assembly (2) and at fixed positions with respect to the tool-carrier assembly (2).

2. Machine tool according to claim 1, characterized in that the tool-carrier assembly (2) is formed to receive and retain independently driven auxiliary machining units.

3. Machine tool according to one of the claims 1 or 2, characterized in that the assembly of the rotary tools is arranged in a first group (7) the axes of which are parallel to the axis of the spindle (I–I) and a second group (8) the axes of which are perpendicular to the axis of the spindle.

4. Machine tool according to claim 3, characterized in that the second group (8) forms a row of tools with horizontal axes, along a vertical line.

5. Machine tool according to one of claims 3 or 4, characterized in that the tool-carrier assembly (2) comprises two vertical walls at right angles to each other, with:
- on one vertical outer face (18), securing holes for a turning tool carrier plate (11);
- a series (13) of horizontal bores passing through parallel to the axis of the spindle for receiving auxiliary machining units;
- a series (14) of horizontal bores passing through at right angles to the axis of the spindle for receiving auxiliary machining units; and
- in the upper portion, fastening holes (15) for installing a variety of equipment.

6. Machine tool according to any one of claims 1 to 5, characterized in that it comprises a frame formed by a vertical upright (6) associated with a horizontal bed (9) to which it is joined by means of a connecting member, the vertical upright (6) bearing the guide (61) on which the carriage (5) of the workpiece spindle (4) slides the horizontal bed (9) carrying guiding and supporting means for the tool carrier assembly (2).

7. Machine tool according to claim 6, characterized in that the horizontal bed (9) carries transverse horizontal guide (91) on which slides a crosspiece (12) carrying longitudinal guideways (121) on which the tool carrier assembly (2) slides.

8. Machine tool according to any one of claims 1 to 7, characterized in that the tool carrier assembly further comprises means for receiving auxiliary machining units and locating them along an axis which is oblique relative to the axis of the spindle.

9. Machine tool according to any one of claims 1 to 8, characterized in that the driving means (3) additionally comprise:
- a declutchable auxiliary motor (32) controlled by means of the digital control system (33) ensuring low-speed drive for the spindle (4) and an immobilisation at selected angular positions,
- angular position detectors to detect the position of the spindle (4) and to transmit the information to the digital control system (33).

FIG. 1